# EUROPÄISCHE PATENTSCHRIFT

(11) **EP 2 630 380 B1**
(45) Veröffentlichungstag und Bekanntmachung des Hinweises auf die Patenterteilung: **15.06.2016**
(21) Anmeldenummer: 11796689.5
(22) Anmeldetag: 13.12.2011
(51) Int. Cl.: F16C 32/04, H02K 3/493, H02K 7/09

(54) **RADIALMAGNETLAGER ZUR MAGNETISCHEN LAGERUNG EINES ROTORS**
RADIAL MAGNETIC BEARING FOR THE MAGNETIC BEARING OF A ROTOR
PALIER RADIAL MAGNÉTIQUE POUR LE MONTAGE SUR PALIER MAGNÉTIQUE D'UN ROTOR

(30) Priorität: 23.12.2010 DE 102010064067
(43) Veröffentlichungstag der Anmeldung: 28.08.2013
(73) Patentinhaber: Siemens Aktiengesellschaft, 80333 München (DE)
(72) Erfinder: DEITS, Robin, Okemos Michigan 48864 (US); LANG, Matthias, 13158 Berlin (DE)
(86) Internationale Anmeldenummer: PCT/EP2011/072527
(87) Internationale Veröffentlichungsnummer: WO 2012/084590

(56) Entgegenhaltungen:
- EP-A2- 0 680 131
- EP-A2- 0 932 246
- CN-A- 101 886 670
- FR-A1- 2 819 648
- JP-A- 2004 132 513
- US-A- 2 201 699
- US-A1- 2004 150 278

## Beschreibung

Die Erfindung betrifft ein Radialmagnetlager zur magnetischen Lagerung eines Rotors. Radialmagnetlager dienen zur magnetischen Lagerung von Rotoren in radialer Richtung.

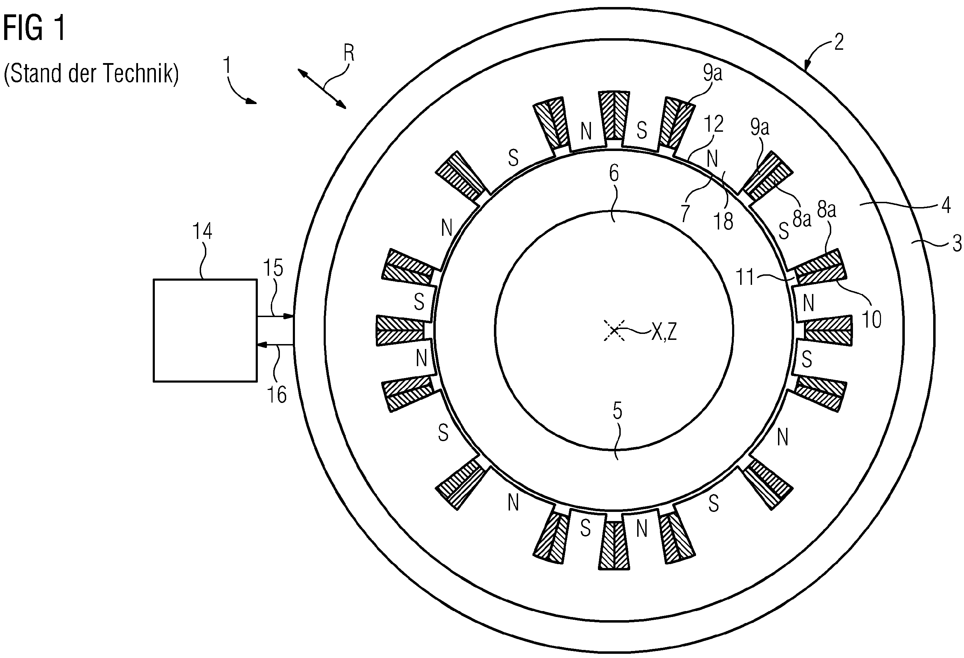

In der FIG 1 ist ein handelsübliches Radialmagnetlager 1 in Form einer schematisierten Schnittansicht dargestellt. Das Radialmagnetlager 1 weist einen ruhend angeordneten Stator 2 auf. Der Stator 2 weist ein Gehäuse 3 und ein Statorelement 4 auf, das z.B. aus einem Vollmaterial oder aus mehreren in axialer Richtung X des Stators hintereinander angeordneten Blechen bestehen kann. Das Statorelement 4 ist magnetisch leitend und besteht z.B. aus einem ferromagnetischen Material. Das Stator element 4 ist um einen Rotor 5 umlaufend angeordnet. Der Rotor 5 besteht aus einem magnetisch leitenden Material wie z.B. einem ferromagnetischen Material. Der Rotor 5 ist drehfest mit einer Welle 6 verbunden. Bei der Welle 6 kann es sich z.B. um die Welle eines elektrischen Motors oder elektrischen Generators handeln. Die Welle 6 rotiert dabei beim Betrieb des elektrischen Motors oder des elektrischen Generators um die Rotationsachse Z.

Das Radialmagnetlager 1 weist auf seiner dem Rotor 5 zugewandten Seite 12 des Statorelements 4 in axiale Richtung X des Statorelements 4 verlaufende Ausnehmungen auf, wobei der Übersicht halber in FIG 1 nur eine Ausnehmung 10 mit einem Bezugszeichen versehen ist. Die Ausnehmungen sind dabei an ihrer dem Rotor zugewandten Seite offen und somit in Form von Nuten realisiert. Die Ausnehmungen weisen dabei im Rahmen des Ausführungsbeispiels nach FIG 1 einen trapezförmigen Querschnitt auf, was nicht unbedingt notwendigerweise so sein muss. In den Ausnehmungen verlaufen elektrische Leitungen von Spulen, wobei der Übersichtlichkeit halber nur die Leitungen 8a und 9a mit einem Bezugszeichen versehen sind. Die Leitungen sind in den Ausnehmungen angeordnet. Durch die Ausnehmungen bilden sich im Statorelement 4 Zähne, wobei der Übersichtlichkeit halber nur ein Zahn 18 mit einem Bezugszeichen versehen ist. Die Spulen sind dabei um die Zähne herum angeordnet, wobei der Strom derart durch die Leitungen der Spulen fließt, dass magnetische Nordpole N und magnetische Südpole S entstehen. Die Größe der Zähne kann dabei unterschiedlich sein, was aber nicht notwendigerweise so sein muss, sondern die Zähne können auch alle gleich groß sein. Weiterhin kann auch die Anzahl der Zähne von Radiallager zu Radiallager unterschiedlich sein.

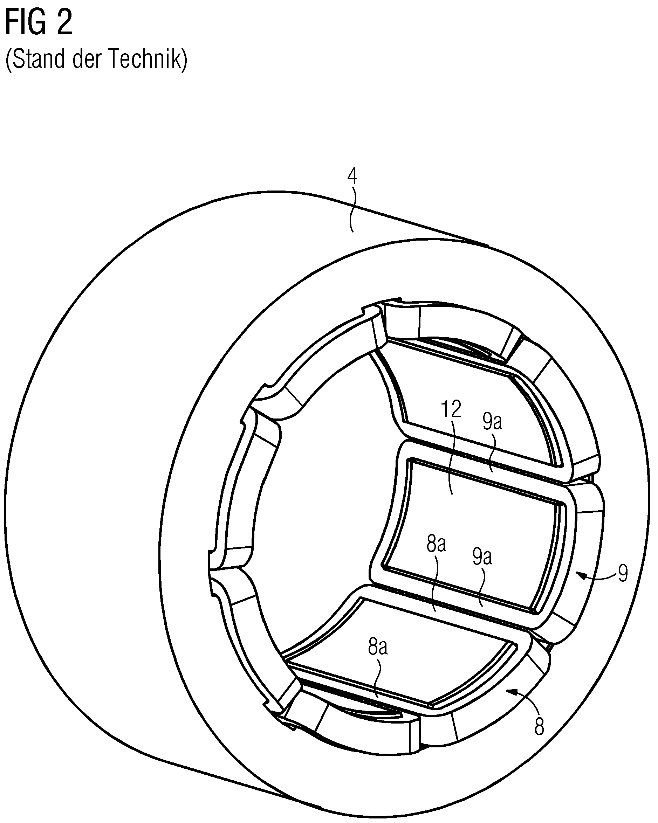

In FIG 2 ist das Statorelement 4 mit den um die Zähne verlaufenden Spulen in einer vereinfachten perspektivischen Ansicht dargestellt. Zur Vereinfachung wurde dabei die Anzahl der Ausnehmungen und damit Anzahl der Zähne und Spulen reduziert und die Größe aller Zähne identisch dargestellt. Gleiche Elemente sind in FIG 2 mit den gleichen Bezugszeichen versehen wie in FIG 1. Der besseren Übersichtlichkeit halber sind nur die beiden Spulen 8 und 9, sowie die elektrischen Leitungen 8a und 9a der Spulen 8 und 9 mit Bezugszeichen versehen. Die Leitungen der Spulen verlaufen in den Ausnehmungen und um die Zähne herum und bilden solchermaßen die Spulen. Die Leitungen liegen dabei üblicherweise in Form von Wickeldrähten vor.

Zurück zu FIG 1. Von den Spulen werden Magnetfelder erzeugt, die den Rotor 5 in einem zwischen Rotor 5 und Stator 2 angeordneten Luftspalt 7 in Schwebe halten. Die Spulen sind somit zur Erzeugung von Magnetfeldern ausgebildet. Zur Steuerung der Magnetfelder weist das Radialmagnetlager 1 eine Steuereinrichtung 14 auf, die die Spulen zur Erzeugung der Magnetfelder entsprechend ansteuert, d.h. bestromt, was durch einen Pfeil 15 in FIG 1 dargestellt ist. Das Radialmagnetlager 1 weist dabei Sensoren zur Lageerkennung des Rotors auf, die der Übersichtlichkeit halber in FIG 1 nicht dargestellt sind und die die Lage des Rotors im Luftspalt 7 zur Ansteuerung der Spulen der Steuereinrichtung 14 übermitteln, was in FIG 1 durch einen Pfeil 16 dargestellt ist. Die Steuereinrichtung 14 enthält Regelungen zur Regelung der durch die Spulen hindurchgehenden elektrischen Ströme. Das Radialmagnetlager 1 dient zur magnetischen Lagerung des Rotors 5 und damit der mit dem Rotor 5 verbundenen Welle 6 in radiale Richtung R. Das Radialmagnetlager 1 ist zur radialen magnetischen Lagerung des Rotors 5 ausgebildet.

Die Leitungen der Spulen sind dabei bei handelsüblichen Radialmagnetlagern derart in den Ausnehmungen angeordnet, dass in den Ausnehmungen zwischen den Leitungen der Spulen und dem Luftspalt 7 jeweilig ein in axialer Richtung X des Stators 2 verlaufender Freiraum verbleibt. In FIG 1 ist der Übersichtlichkeit halber nur ein Freiraum 11 mit einem Bezugszeichen versehen.

Der Rotor 5 besteht in der Regel aus einem elektrisch leitfähigen ferromagnetischen Material, das eine Kraftwirkung durch die vom Stator erzeugten Magnetfelder erfährt. Wenn die Welle 6 und damit der mit der Welle 6 verbundene Rotor 5 im Luftspalt 7 rotiert, ist der Rotor 5 einem ständigen magnetischen Wechselfeld durch die abwechselnden Magnetpole N und S des Stators 2 ausgesetzt. Hierdurch werden in den Rotor 5 Wirbelströme induziert, die unerwünscht sind, da sie die Dynamik des Radialmagnetlagers einschränken und eine thermische Belastung des Rotors bewirken. Da Radialmagnetlager häufig für Anwendungen verwendet werden, bei denen sich der Rotor mit einer hohen Drehzahl dreht, kommt der Reduktion der Wirbelströme bei Radialmagnetlagern eine besondere Bedeutung zu.

Im Elektromaschinenbau sind dabei zwei Maßnahmen zur Reduktion von in einem Rotor fließenden Wirbelströmen bekannt. Eine erste Möglichkeit besteht darin, die Anzahl der Magnetpole des Stators zu reduzieren. Dies führt allerdings in der Regel zu einem größeren Bauvolumen, so dass hier ein Kompromiss zwischen möglichst geringer Anzahl der Magnetpole und einem geringen Bauvolumen gefunden werden muss. Eine weitere Möglichkeit besteht darin, den Rotor aus dünnen Blechen, die gegeneinander isoliert sind, auszubilden.

Aus der US 7,545,066 B2 und der US 2010/0187926 A1 sind Magnetlager zur magnetischen Lagerung eines Rotors bekannt. Aus der JP 2004 132 513 A ist ein Radialmagnetlager bekannt, welches als Heteropolarlager ausgeführt ist.

Aus der CN 101886670 A ist ebenfalls ein Radialmagnetlager bekannt, welches als Heteropolarlager ausgeführt ist. Dieses Radialmagnetlager weist die Merkmale der Oberbegriffe der Ansprüche 1 und 3 auf.

Aus der US 2 201 699 A ist eine dynamoelektrische Maschine bekannt, welche Wicklungen aufweist, die in offenen Nuten angeordnet sind. Insbesondere um Wirbelstromverluste im Stator von Elektromotoren zu verringern, sind magnetische Füllelemente vorgesehen, mit welchen die offenen Nuten geschlossen werden können.

Es ist Aufgabe der Erfindung, bei einem Radialmagnetlager im Rotor auftretende Wirbelströme zu reduzieren.

Diese Aufgabe wird gelöst durch ein Radialmagnetlager zur magnetischen Lagerung eines Rotors, wobei das Radialmagnetlager einen Stator aufweist, wobei der Stator ein magnetisch leitendes um den Rotor umlaufend angeordnetes Statorelement aufweist, wobei das Statorelement auf seiner dem Rotor zugewandten Seite in axiale Richtung des Statorelements verlaufende Ausnehmungen aufweist in denen elektrische Leitungen von Spulen angeordnet sind, wobei von den Spulen Magnetfelder erzeugbar sind, die den Rotor in einem zwischen Rotor und Stator angeordneten Luftspalt in Schwebe halten, wobei die Leitungen derart in den Ausnehmungen angeordnet sind, dass in den Ausnehmungen zwischen den Leitungen und dem Luftspalt ein Freiraum verbleibt, wobei in dem Freiraum ein magnetisch leitendes Füllelement angeordnet ist.

Weiterhin wird diese Aufgabe gelöst durch ein Radialmagnetlager zur magnetischen Lagerung eines Rotors, wobei das Radialmagnetlager einen Stator aufweist, wobei der Stator ein magnetisch leitendes um den Rotor umlaufend angeordnetes Statorelement aufweist, wobei das Statorelement auf seiner dem Rotor zugewandten Seite in axiale Richtung des Statorelements verlaufende Ausnehmungen aufweist in denen elektrische Leitungen von Spulen angeordnet sind, wobei von den Spulen Magnetfelder erzeugbar sind, die den Rotor in einem zwischen Rotor und Stator angeordneten Luftspalt in Schwebe halten, wobei die Leitungen derart in den Ausnehmungen angeordnet sind, dass in den Ausnehmungen die Leitungen bündig mit der dem Rotor zugewandeten Seite des Statorelements abschließen, wobei an der Rotor zugewandten Seite des Statorelements ein magnetisch leitender um den Rotor verlaufender Ring angeordnet ist, wobei der Luftspalt zwischen Ring und Rotor angeordnet ist.

Es erweist sich als vorteilhaft, wenn das Füllelement in axiale Richtung des Stators in den Freiraum einschiebbar ist, da das Füllelement dann auf besonders einfache Art und Weise in den Freiraum eingebracht werden kann.

Ausführungsbeispiele der Erfindung sind in der Zeichnung dargestellt und werden im Folgenden näher erläutert. Dabei zeigen:
- FIG 1: die schematisierte Schnittansicht eines handelsüblich bekannten Radialmagnetlagers,
- FIG 2: ein mit Spulen versehenes Statorelement eines handelsüblich bekannten Radialmagnetlagers in Form einer vereinfachten perspektivischer Darstellung,
- FIG 3: eine erste Ausführungsform des erfindungsgemäßen Radialmagnetlagers,
- FIG 4: ein Füllelement, und
- FIG 5: eine zweite Ausführungsform des erfindungsgemäßen Radialmagnetlagers.

Gleiche Elemente sind in den Figuren mit den gleichen Bezugszeichen versehen.

Bei handelsüblich bekannten Radialmagnetlagern sind, wie schon gesagt, die Leitungen der Spulen derart in den Ausnehmungen des Statorelements angeordnet, dass in den Ausnehmungen zwischen den Leitungen und dem Luftspalt ein Freiraum verbleibt. In FIG 1 ist ein solcher in axialer Richtung X des Stators 2 verlaufender Freiraum mit dem Bezugszeichen 11 versehen. Die Spulen schließen also nicht bündig mit der dem Rotor zugewandten Seite 12 des Statorelements 4, d.h. nicht bündig mit den Polköpfen der magnetischen Nord- und Südpole N und S, ab. Es verbleibt bei jeder Ausnehmung ein Freiraum 11.

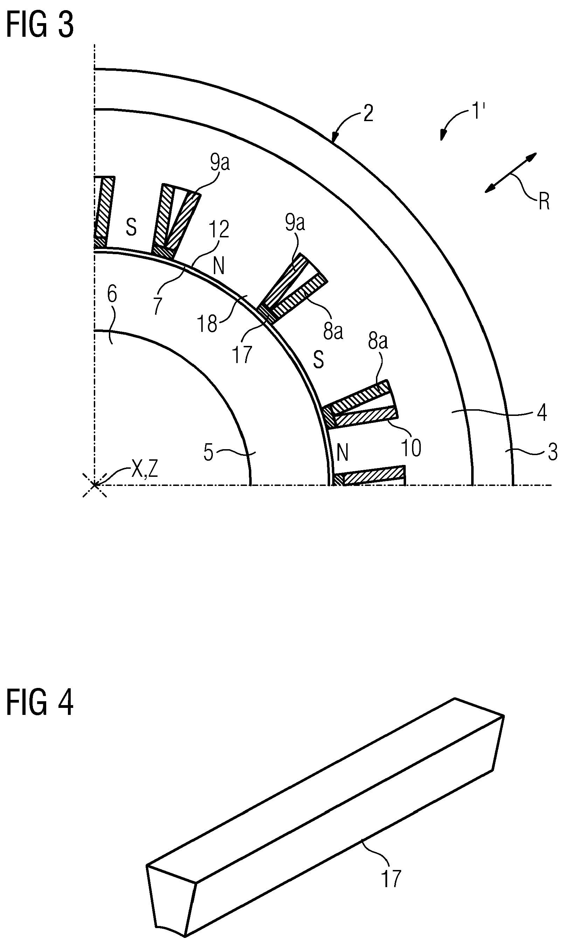

In FIG 3 ist in Form einer schematisierten Darstellung eine erste Ausführungsform eines erfindungsgemäßen Radialmagnetlagers 1' dargestellt. Der Aufbau und die Funktion des erfindungsgemäßen Radialmagnetlagers 1' stimmt dabei mit dem aus dem handelsüblich bekannten Radialmagnetlager 1 gemäß FIG 1 und FIG 2 überein. Gleiche Elemente sind in FIG 3 mit den gleichen Bezugszeichen versehen wie in FIG 1 und FIG 2. In FIG 3 ist ein vergrößerter Ausschnitt von FIG 1 dargestellt. Erfindungsgemäß ist in dem jeweiligen Freiraum ein in axiale Richtung X des Stators 2 verlaufendes magnetisch leitendes Füllelement 17 angeordnet, wobei der Übersichtlichkeit halber in FIG 3 nur ein Füllelement 17 mit einem Bezugszeichen versehen ist.

In FIG 4 ist das Füllelement 17 in perspektivischer Sicht dargestellt. Das Füllelement besteht aus einem magnetisch leitenden Material, wie z.B. einem ferromagnetischen Material (z.B. Eisen) und kann z.B. aus dem gleichen Material bestehen, aus dem das Statorelement 4 besteht. Das Füllelement schließt vorzugsweise bündig mit den in den Ausnehmungen angeordneten Leitungen der Spulen ab. Weiterhin schließt das Füllelement vorzugsweise bündig mit der dem Rotor zugewandten Seite 12 des Statorelements 4 ab, so dass die Breite des Luftspalt 7 über den gesamten inneren Umfang des Statorelements 4 konstant bleibt.

Das Füllelement ist vorzugsweise in axialer Richtung X des Stators in den Freiraum einschiebbar, so dass es auch nach dem Einbau der Spulen in das Statorelement 4 auf einfache Art und Weise einbracht werden kann. Das Füllelement ist solchermaßen vorzugsweise in Form eines Schiebers ausgebildet. Mit dem Füllelement wird ein magnetischer Nutverschluss der als Nuten ausgebildeten Ausnehmungen realisiert. Durch den mittels des Füllelements realisierten magnetischen Nutverschluss entsteht ein veränderter Magnetfeldverlauf im Luftspalt 7. Durch den magnetischen Nutverschluss wird an den Übergängen von einem Magnetpol zum nächsten Magnetpol ein weicherer Verlauf der in radialer Richtung verlaufenden Komponente der Magnetflussdichte erreicht, was eine Reduzierung der im Rotor induzierten Wirbelströme zur Folge hat.

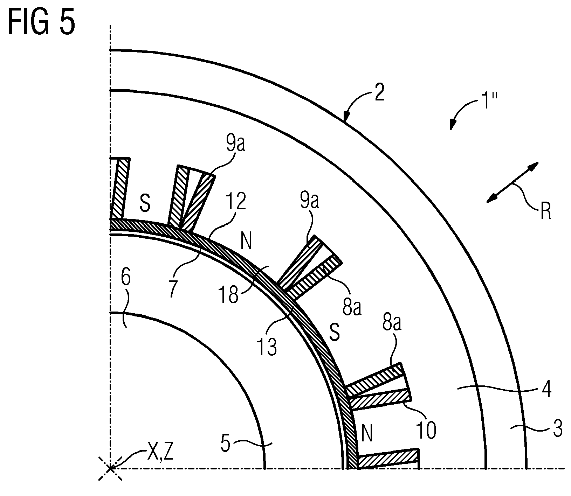

In FIG 5 ist in Form einer schematisierten Darstellung eine weitere Ausführungsform eines erfindungsgemäßen Radialmagnetlagers 1" dargestellt. Der wesentliche Aufbau und die Funktion des erfindungsgemäßen Radialmagnetlagers 1" stimmt dabei mit dem aus dem handelsüblich bekannten Radialmagnetlager 1 gemäß FIG 1 und FIG 2 überein. Gleiche Elemente sind in FIG 5 mit den gleichen Bezugszeichen versehen wie in FIG 1 und FIG 2. In FIG 5 ist im Wesentlichen ein vergrößerter Ausschnitt von FIG 1 dargestellt. Bei der Ausführungsform des erfindungsgemäßen Radialmagnetlagers 1" gemäß FIG 5 schließen im Gegensatz zu dem handelsüblich bekannten Radialmagnetlager 1 gemäß FIG 1 die Ausnehmungen bündig mit der dem Rotor 5 zugewandten Seite 12 des Statorelements 4, d.h. bündig mit den Polköpfen der magnetischen Nord- und Südpole N und S, ab. Der magnetische Nutverschluss wird bei dieser Ausführungsform der Erfindung durch einen magnetisch leitenden Ring 13 erreicht. Der magnetisch leitende Ring 13 ist an der dem Rotor 5 zugewandten Seite 12 des Statorelements 4 angeordnet, wobei der Luftspalt 7 zwischen Ring 13 und Rotor 5 angeordnet ist. Der Ring 13 ist Bestandteil des Stators 2. Der Ring 13 kann dabei z.B. aus einem ferromagnetischen Material wie z.B. Eisen bestehen und z.B. aus dem gleichen Material wie das Statorelement 4 bestehen. Durch den Ring wird an den Übergängen von einem Magnetpol zum nächsten Magnetpol ein weicherer Verlauf der in radialer Richtung verlaufenden Komponente der Magnetflussdichte erreicht, was eine Reduzierung der im Rotor induzierten Wirbelströme zur Folge hat.

Es sei an dieser Stelle angemerkt, dass der Rotor 5 auch integraler Bestandteil der Welle 6 sein kann und somit die Welle 6 zusammen mit dem Rotor 5 als ein einstückiges Element ausgeführt sein kann. Der Rotor liegt dann in Form der Welle vor. Der Außendurchmesser der Welle 6 ist dabei an der Stelle an der das erfindungsgemäße Radialmagnetlager angeordnet ist nur geringfügig kleiner als der Innendurchmesser des Stators des Radialmagnetlagers, so dass zwischen Stator und Welle nur ein Luftspalt vorhanden ist.

## Patentansprüche

1. Radialmagnetlager zur magnetischen Lagerung eines Rotors (5), **wobei das Radialmagnetlager als Heteropolarlager ausgeführt ist,** wobei das Radialmagnetlager (1',1",1"') einen Stator (2) aufweist, wobei der Stator (2) ein magnetisch leitendes um den Rotor (5) umlaufend angeordnetes Statorelement (4) aufweist, wobei das Statorelement (4) auf seiner dem Rotor (5) zugewandten Seite (12) in axiale Richtung (X) des Statorelements (4) verlaufende Ausnehmungen (10) aufweist in denen elektrische Leitungen (8a,9a) von Spulen (8,9) angeordnet sind, wobei von den Spulen (8,9) Magnetfelder erzeugbar sind, die den Rotor (5) in einem zwischen Rotor (5) und Stator (2) angeordneten Luftspalt (7) in Schwebe halten, wobei die Leitungen (8a,9a) derart in den Ausnehmungen (10) angeordnet sind, dass in den Ausnehmungen (10) zwischen den Leitungen (8a,9a) und dem Luftspalt (7) ein Freiraum (11) verbleibt, **dadurch gekennzeichnet, dass** in dem Freiraum (11) ein magnetisch leitendes Füllelement (17) angeordnet ist.

2. Radialmagnetlager nach Anspruch 1, **dadurch gekennzeichnet, dass** das Füllelement (17) in axiale Richtung (X) des Stators (2) in den Freiraum (11) einschiebbar ist.

3. Radialmagnetlager zur magnetischen Lagerung eines Rotors (5), **wobei das Radialmagnetlager als Heteropolarlager ausgeführt ist,** wobei das Radialmagnetlager (1',1",1"') einen Stator (2) aufweist, wobei der Stator (2) ein magnetisch leitendes um den Rotor (5) umlaufend angeordnetes Statorelement (4) aufweist, wobei das Statorelement (4) auf seiner dem Rotor (5) zugewandten Seite (12) in axiale Richtung (X) des Statorelements (4) verlaufende Ausnehmungen (10) aufweist in denen elektrische Leitungen (8a,9a) von Spulen (8,9) angeordnet sind, wobei von den Spulen (8,9) Magnetfelder erzeugbar sind, die den Rotor (5) in einem zwischen Rotor und Stator (2) angeordneten Luftspalt (7) in Schwebe halten, **dadurch gekennzeichnet, dass** die Leitungen (8a,9a) derart in den Ausnehmungen (10) angeordnet sind, dass in den Ausnehmungen (10) die Leitungen (8a,9a) bündig mit der dem Rotor (5) zugewandten Seite (12) des Statorelements (4) abschließen, wobei an der **dem** Rotor (5) zugewandten Seite (12) des Statorelements (4) ein magnetisch leitender um den Rotor verlaufender Ring angeordnet ist, wobei der Luftspalt (7) zwischen Ring und Rotor (5) angeordnet ist.

## Claims

1. Radial magnetic bearing for magnetic support of a rotor (5), **wherein the radial magnetic bearing is designed as a heteropolar bearing,** wherein the radial magnetic bearing (1',1",1"') has a stator (2), wherein the stator (2) has a magnetically-conductive stator element (4) arranged running around the rotor (5), wherein the stator element (4), on its side (12) facing towards the rotor (5), has recesses (10) running in the axial direction (X) of the stator element (4) in which electrical lines (8a, 9a) of coils (8, 9) are disposed, wherein magnetic fields are able to be created by the coils (8, 9) which hold the rotor (5) suspended in an air gap (7) disposed between rotor (5) and stator (2), wherein the lines (8a, 9a) are disposed in the recesses (10) such that a free space (11) remains in the recesses (10) between the lines (8a, 9a) and the air gap (7), **characterised in that** a magnetically-conductive filler element (17) is disposed in the free space (11).

2. Radial magnetic bearing according to claim 1, **characterised in that** the filler element (17) is able to be pushed into the free space (11) in the axial direction (X) of the stator (2).

3. Radial magnetic bearing for magnetic support of a rotor (5), **wherein the radial magnetic bearing is designed as a heteropolar bearing,** wherein the radial magnetic bearing (1', 1" ,1''') has a stator (2), wherein the stator (2) has a magnetically-conductive stator element (4) arranged running around the rotor (5), wherein the stator element (4), on its side (12) facing towards the rotor (5), has recesses (10) running in the axial direction (X) of the stator element (4) in which electrical lines (8a, 9a) of coils (8, 9) are disposed, wherein magnetic fields are able to be created by the coils (8, 9) which hold the rotor (5) suspended in an air gap (7) disposed between rotor (5) and stator (2),
**characterised in that** the lines (8a, 9a) are disposed in the recesses (10) such that the lines (8a, 9a) in the recesses (10) terminate flush with the side (12) of the stator element (4) facing towards the rotor (5), wherein a magnetically-conductive ring running around the rotor is disposed on the side (12) of the stator element (4) facing towards the rotor (5), wherein the air gap (7) is disposed between ring and rotor (5).

## Revendications

1. Palier radial magnétique pour le montage sur palier magnétique d'un rotor (5), dans lequel le palier radial magnétique est réalisé sous la forme d'un palier hétéropolaire, le palier (1', 1'', 1"') radial magnétique ayant un stator (2), le stator (2) ayant un élément (4) de stator conducteur magnétiquement et faisant le tour du rotor (5), l'élément (4) de stator ayant, du côté (12) tourné vers le rotor (5), des évidements (10) qui s'étendent dans la direction (X) axiale de l'élément (4) du stator et dans lesquels sont disposés des conducteurs (8a, 9a) électriques de bobines (8, 9), dans lequel il peut être obtenu par les bobines (8, 9) des champs magnétiques qui maintiennent en suspension le rotor (5) dans un entrefer (7) entre le rotor (5) et le stator (2), les conducteurs (8a, 9a) étant disposés dans les évidements (10) de manière à ce qu'il subsiste dans les évidements (10) un espace (11) libre entre les conducteurs (8a, 9a) et l'entrefer (7), **caractérisé en ce que**
un élément (17) de remplissage conducteur magnétiquement est disposé dans l'espace (11) libre.

2. Palier radial magnétique suivant la revendication 1, **caractérisé en ce que** l'élément (17) de remplissage peut être inséré dans l'espace (11) libre dans la direction (X) axiale du stator (2).

3. Palier radial magnétique pour le montage sur palier magnétique d'un rotor (5), dans lequel le palier radial magnétique est réalisé sous la forme d'un palier hétéropolaire, le palier (1', 1'', 1"') radial magnétique ayant un stator (2), le stator (2) ayant un élément (4) de stator conducteur magnétiquement et faisant le tour du rotor (5), l'élément (4) de stator ayant, du côté (12) tourné vers le rotor (5), des évidements (10) qui s'étendent dans la direction (X) axiale de l'élément (4) du stator et dans lesquels sont disposés des conducteurs (8a, 9a) électriques de bobines (8, 9), dans lequel il peut être obtenu par les bobines (8, 9) des champs magnétiques qui maintiennent en suspension le rotor (5) dans un entrefer (7) entre le rotor (5) et le stator (2), **caractérisé en ce que**
les conducteurs (8a, 9a) sont disposés dans les évidements (10) de manière à ce que, dans les évidements (10), les conducteurs (8a, 9a) soient au ras du côté (12), tourné vers le rotor (5), de l'élément (4) du stator, un anneau conducteur magnétiquement et s'étendant autour du rotor étant disposé du côté (12), tourné vers le rotor (5), de l'élément (4) du stator, l'entrefer (7) étant disposé entre l'anneau et le rotor (5).
